# EUROPEAN PATENT SPECIFICATION

(11) **EP 3 704 425 B1**
(45) Date of publication and mention of the grant of the patent: **30.08.2023**
(21) Application number: 18808485.9
(22) Date of filing: 29.10.2018
(51) Int. Cl.: F25B 1/00, F24D 3/18, F25B 25/00, F24D 11/02, F25B 49/02

(54) **THERMODYNAMIC SYSTEM FOR BALANCING THERMAL LOADS IN INDUSTRIAL PLANTS AND PROCESSES, AND RELATED METHOD**
THERMODYNAMISCHES SYSTEM ZUM AUSGLEICH THERMISCHER BELASTUNGEN IN INDUSTRIEANLAGEN UND VERFAHREN SOWIE ENTSPRECHENDES VERFAHREN
SYSTÈME THERMODYNAMIQUE POUR ÉQUILIBRER DES CHARGES THERMIQUES DANS DES INSTALLATIONS ET PROCÉDÉS INDUSTRIELS, ET MÉTHODE ASSOCIÉ

(30) Priority: 30.10.2017 IT 201700123450
(43) Date of publication of application: 09.09.2020
(73) Proprietor: Frigel Firenze S.p.A., 50018 Scandicci (FI) (IT)
(72) Inventor: DORIN, Filippo, 50122 Firenze (IT)
(74) Representative: Mannucci, Michele
(86) International application number: PCT/IB2018/058447
(87) International publication number: WO 2019/087037

(56) References cited:
- EP-A2- 2 458 304
- DE-U1-202009 017 577
- FR-A1- 2 956 477
- JP-A- 2009 281 641

## Description

### TECHNICAL FIELD

The present invention relates to thermodynamic systems for managing thermal loads in industrial plants and processes. The invention also relates to plants and processes comprising thermodynamic systems of the above mentioned type, as well as to methods for managing thermal loads in industrial plants and processes.

More in particular, the invention relates to systems, processes and plants, wherein a heat pump is used for removing heat at low temperature from a section, step or operative unit of a process or plant, and to transfer heat at high temperature to a different section, step or operative unit of the same process or plant, or of a different process or plant.

### BACKGROUND ART

Many industrial processes require the use of thermal flows, for example for cooling and/or heating one or more sections of the plant, or one or more steps of an industrial process. For example in bottling plants, especially where carbonated beverages are bottled, it is well known to cool the beverage before bottling, in order to avoid or to limit foam production while filling the bottles. If the bottles are filled at low temperature, condensate tends to form on the outer surfaces thereof, which is an inconvenience in the following packaging operations. Systems have been therefore studied, where the bottles, after having been filled, are heated at a temperature higher than the dew-point temperature, in order to avoid condensate on the outer surfaces thereof. US4356681 discloses a plant for cooling the beverage and then heating the bottles. A heat pump transfers heat from the cooling section, at a temperature lower than the ambient temperature, to the heating section, at a temperature higher than the ambient temperature, allowing significant energy saving. A substantially equivalent plant is described in the document US9561946.

One of the criticalities of these plants is the thermal balancing between the cooling section and the heating section.

Similar problems in managing the thermal flows also occur in other types of plants and in other processes, where in general heat is transferred by means of a heat pump from a cooling circuit to a heating circuit.

For example, in pasteurization processes there is the need for transferring heat from a hot section and to remove heat from a cold section of a plant. Examples of these plants are described in US2012/0312419; DE102007003919; DE 102007003976.

EP2266777 and WO2016092404 disclose methods and plants for injection molding or extruding plastic materials. In these plants, a heat source shall be provided for drying the polymer grains or chips before melting them, and for then delivering to the extruder or mold. Moreover, the extruder or mold shall be cooled. Thermodynamic systems have been studied, allowing optimizing the energy balance of these plants by means of a heat pump that removes heat from the mold by means of a cooling circuit and transfers heat, by means of a heating circuit, to a hopper containing the polymer grains or chips to be dried before melting.

In these plants, heat transfer from the cooling circuit to the heating circuit occurs at the expense of mechanical power supplied by an electric motor or other suitable mechanical power source, controlling the compressor(s) for the refrigerant fluid of the heat pump.

One of criticalities in these plants and processes is the thermal balancing, due in particular to the change in thermal loads in the plant area or process step for which cooling is required and in the plant area or process step for which heating is required.

In particular, it shall be taken into account that the cooling and heating effects generated by the heat pump progressively change as the capacity thereof varies, both on the hot side and on the cold side. Vice versa, the effective thermal loads, i.e. the cooling and heating demand of the two steps of the industrial process, can vary independently of each other, for example following physiological process intermittences, transients, such as start-up, slowdowns, sudden stop of the process, or due to other reasons. EP 2458304 A2 discloses a heat pump system including a heat pump to heat a water reservoir of a user. The heat pump system is integrated with a solar collector and includes a second heat exchanger to collect heat from the solar collector. Said system is configured to provide five different and mutually excluding operation modes by separating the relevant circuit from the other circuits.

A need therefore exists for a thermodynamic system adapted to balance changes in thermal loads on the hot side and on the cold side of the heat pump in effective manner, both in order to track changes in the operative conditions and for energy saving as well.

### SUMMARY OF THE INVENTION

According to an aspect, in order to overcome or to alleviate one or more of the drawbacks of the current art, a thermodynamic system according to claim 1 is provided. The system comprises: a cooling circuit adapted to circulate a heat-transferring fluid in heat exchange relationship with a cold side of a heat pump and with a first operative unit, from which heat shall be removed; a heating circuit adapted to circulate a heat-transferring fluid in heat exchange relationship with a hot side of a heat pump and with a second operative unit, to which heat shall be delivered. The heat pump transfers heat from the cooling circuit, at lower temperature, to the heating circuit, at higher temperature. Characteristically, the cooling circuit is connected to an auxiliary circuit to exchange a flow of heat-transferring fluid with the auxiliary circuit. Moreover, a first flow control valve is provided for regulating the flow from the auxiliary circuit to the cooling circuit. The heating circuit is connected to the same auxiliary circuit, to which the cooling circuit is connected, to exchange a flow of heat-transferring fluid with the auxiliary circuit. A second flow control valve is provided for regulating the flow from the auxiliary circuit to the heating circuit.

The flow of heat-transferring fluid from the auxiliary circuit to the heating circuit and to the cooling circuit represent respective fictive thermal loads on the hot side and on the cold side of the heat pump. By modulating these loads it is possible to optimize the operation of the thermodynamic system and to have a right balancing.

In the present description and the attached claims, the term "operative unit" generically refers to a process step, or a plant station or section, an equipment, element, machinery, assembly of machines or other set of one or more components, from which heat shall be removed or to which heat shall be transferred. In some embodiments, the operative unit to be cooled can be a bottling station, or a part or component of a bottling station. In other embodiments, the operative unit from which heat shall be removed can be a mold or an extruder to mold or to extrude plastic. The operative unit to be heated can be a tunnel for heating bottles filled with a previously cooled beverage. In other embodiments, the unit to be heated can be a hopper or other container for grains or chips of a polymer that shall be melt to mold or extrude semi-finished products. However, it should be understood that the above are only non-limiting applications of the inventive concept described and claimed herein.

Through the auxiliary circuit it is possible to supply to the cold side and to the hot side of the heat pump a fictive load allowing balancing the heat exchange at both the sides of the heat pump, optimizing the operation thereof.

A control and adjustment arrangement may provide for independent regulating loops for the hot side and the cold side of the heat pump. Within the present description, the term "hot side of the heat pump" refers to the side to which the heat pump transfers heat, whilst the term "cold side of the heat pump" refers to the side from which the heat pump removes heat.

The control arrangement can be also adapted to control and to modulate the thermal capacity of the heat pump according to opening and closing levels of the valves delivering heat-transferring fluid from the auxiliary circuit to the heating circuit and the cooling circuit, respectively.

In some embodiments, the heat pump is a multi-stage heat pump.

Further advantageous features and embodiments of the thermodynamic system according to the present invention will be described hereunder and in the attached claims, which form an integral part of the present description.

According to a further aspect, disclosed herein is an industrial plant or process, comprising at least two operative units thermally associated with the thermodynamic system defined above. In particular, the cooling circuit of the thermodynamic system is in heat exchange relationship with the first operative unit and the heating circuit is in heat exchange relationship with the second operative unit.

According to a further aspect, a method is disclosed for transferring heat in a plant or process as defined in claim 14. It a first operative unit and a second operative unit; wherein the method comprises the following steps:
circulating a heat-transferring fluid in a cooling circuit in heat exchange relationship with the first operative unit and with a cold side of a heat pump;
extracting heat at a first temperature from the first operative unit through the heat pump and the cooling circuit;
circulating a heat-transferring fluid in a heating circuit in heat exchange relationship with the second operative unit and with a hot side of the heat pump;
delivering heat at a second temperature to the second operative unit through the heat pump and the heating circuit;
transferring a first flow of heat-transferring fluid from the cooling circuit to an auxiliary circuit;
transferring a second flow of heat-transferring fluid from the heating circuit to the auxiliary circuit;
exchanging heat between the first flow of heat-transferring fluid and the second flow of heat-transferring fluid and a heat source at a temperature intermediate between the first temperature and the second temperature;
transferring a third flow of heat-transferring fluid at the intermediate temperature from the auxiliary circuit to the cooling circuit, and a fourth flow of heat-transferring fluid at the intermediate temperature from the auxiliary circuit to the heating circuit facilitated by means of a circulating pump.

In some embodiments, the method also comprises the following steps:
modulating the third flow of heat-transferring fluid from the auxiliary circuit to the cooling circuit according to a controlled parameter indicative of the thermal load on the cooling circuit;
modulating the fourth flow of heat-transferring fluid from the auxiliary circuit to the heating circuit according to a controlled parameter indicative of the thermal load on the heating circuit.

In some embodiments of the method, the controlled parameter indicative of the thermal load on the cooling circuit is a temperature of the heat-transferring fluid in the cooling circuit, for example a temperature at the inlet of the cold side of the heat pump. The controlled parameter indicative of the thermal load on the heating circuit may be a temperature of the heat-transferring fluid in the heating circuit, for example the temperature at the inlet of the hot side of the heat pump.

In general, the third flow of heat-transferring fluid from the auxiliary circuit to the cooling circuit can be increased or decreased in order to keep the respective controlled parameter at a respective set-point value, for example a pre-set value of the temperature of the heat-transferring fluid at a point of the cooling circuit. Similarly, the fourth flow of heat-transferring fluid cam be increased or decreased in order to keep the respective controlled parameter at a respective set-point value, for example a pre-set value of the temperature of the heat-transferring fluid at a point of the heating circuit.

The third flow and the fourth flow can be adjusted by means of respective flow control valves with adjustable and controlled opening.

In some embodiments of the method disclosed herein, a step can be also provided of regulating the thermal capacity of the heat pump according to said third flow and fourth flow.

For example, in some embodiments threshold values of the maximum flow and the minimum flow can be provided for the third flow and/or the fourth flow. If the flows are adjusted by means of control valves with controlled opening, a minimum opening threshold and a maximum opening threshold can be set for the two control valves. The thermal capacity of the heat pump can be varied based on whether one or both of the valves achieve the maximum opening value or the minimum opening value.

In some embodiments of the method disclosed herein, the thermal load of the heat pump can be increased when at least one of the third flow and the fourth flow has achieved a respective minimum threshold or is below said minimum threshold. If the flows are controlled by means of control valves, the thermal load of the heat pump is increased when at least one of the control valve for the third flow and the control valve for the fourth flow has achieved the minimum opening threshold or is below said minimum threshold. This minimum opening threshold can also be a complete closing of the respective valve.

In advantageous embodiments of the method disclosed herein, the thermal load of the heat pump can be decreased when both the third flow and the fourth flow have achieved or exceeded the respective maximum threshold. If the flows are controlled by means of control valves, the thermal load of the heat pump can be decreased when both the control valve for the third flow and the control valve for the fourth flow have achieved or exceeded the maximum opening threshold.

The increase and/or the decrease in the thermal capacity of the heat pump can be stepped at regular time intervals in order to have a better control. The increase and/or decrease can occur after the respective condition of flow or opening of the control valves has been achieved and has been kept for a suitable time interval, greater than zero, in order to avoid instability to the control system.

As will be clearly apparent from the following description of exemplary embodiments, with a controlled thermodynamic system as described herein it is possible to have a system that is particularly effective from an energy viewpoint. Fine and quick adjustments of the cooling and heating capacity can be obtained by means of the heat pump, optimizing the overall energy consumption of the heat pump.

Moreover, with the methods and systems disclosed herein it is possible to stabilize quickly thermal transients and intermittent loads on both the users, i.e. both on the operative unit, from which heat shall be removed, and on the operative unit, to which heat shall be delivered.

The systems and methods disclosed herein also allow managing conditions of no load on one or the other of the operative units.

The control system can ensure the achievement and keeping of the required temperature for the operative units also in condition of intermittent partial loads or no loads.

### BRIEF DESCRIPTION OF THE DRAWINGS

The invention will be better understood by following the description and the accompanying drawing, which shows a non-limiting example of embodiment of the invention. More particularly, in the drawing:
figure 1 shows a simplified diagram of a thermodynamic system according to the present invention, associated to an industrial process or plant;
figure 2 shows a more detailed diagram of a more complex embodiments of a thermodynamic system according to the present invention associated to a bottling plant for bottling beverages.

### DETAILED DESCRIPTION

The detailed description below of exemplary embodiments is made with reference to the attached drawing. The same reference numbers in different figures identify equal or similar elements. Moreover, the drawings are not necessarily to scale. The detailed description below does not limit the invention. The protective scope of the present invention is defined by the attached claims.

In the description, the reference to "an embodiment", "the embodiment" or "some embodiments" means that a particular feature, structure or element described with reference to an embodiment is comprised in at least one embodiment of the described object. The sentences "in an embodiment" or "in the embodiment" or "in some embodiments" in the description do not therefore necessarily refer to the same embodiment or embodiments. The particular features, structures or elements can be furthermore combined in any adequate way in one or more embodiments.

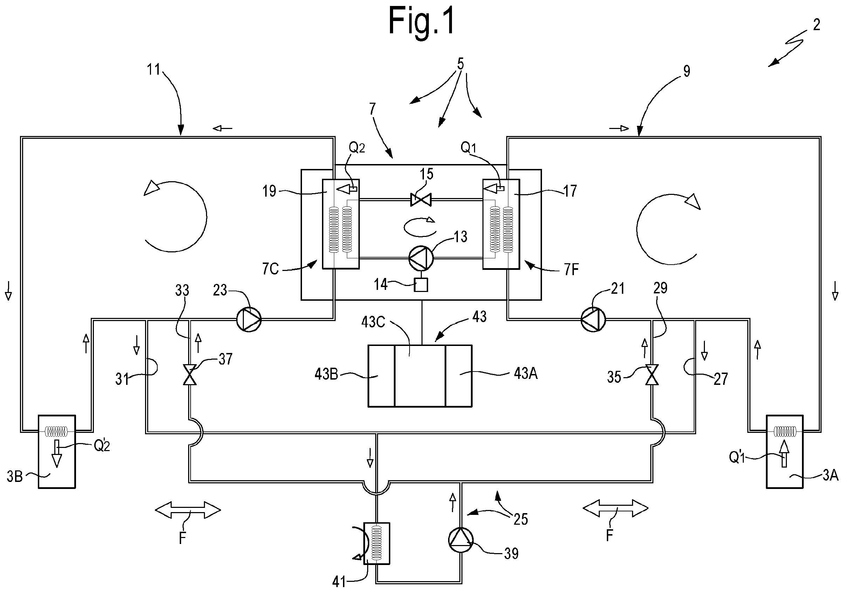

Figure 1 schematically shows a thermodynamic system and the plant comprising it. The aggregate of plant and thermodynamic system is indicated with the reference number 2. In the diagram of figure 1 only two operative units of the plant are represented, indicated with the reference numbers 3A 3B. The operative units 3A, 3B can be of various type. Just by way of example, the operative unit 3A requires heat removal and the operative unit 3B requires heat delivery.

Just by way of example, the first operative unit 3A can comprise a bottling station, in particular for bottling a carbonated beverage, with a system for cooling the beverage before filling the bottles. The second operative unit 3B can comprise a tunnel for heating the filled bottles, before packaging thereof. However, as mentioned above, there are also other industrial processes and plants, for which it is necessary to remove heat from a station, plant operative unit or process step, and to deliver heat to another station, plant operative unit or process step. Therefore, what illustrated below just by way of example with reference to bottling plants can be advantageously used to solve similar technical problems in industrial processes and plants of different nature; therefore, the present description is not limited to a particular application, even if in the process of bottling previously cooled beverages the thermodynamic system of the invention allows obtaining particular advantages and solving problems of thermal balancing specifically affecting this type of plants and processes.

It should be also understood that the thermodynamic system described herein can be used to transfer heat from a cooling circuit to a heating circuit associated to different plants or processes. In other words, the thermodynamic system of the invention can be used to remove heat at a first temperature from a process requiring cooling, and to deliver heat at a second temperature, higher than the first temperature, to a different process requiring heating.

In the diagram of figure 1, number 5 indicates the thermodynamic system allowing removing heat from the operative unit 3A and delivering it to the operative unit 3B. Schematically, the thermodynamic system 5 comprises: a heat pump 7, a cooling circuit 9 and a heating circuit 11.

The cooling circuit 9 is in heat exchange relationship with the first operative unit 3A and with the cold side, indicated with 7F, of the heat pump 7. The heating circuit 11 is in heat exchange relationship with the second operative unit 3B and with the hot side, indicated with 7C, of the heat pump 7. In its essential characteristics, the heat pump is represented as a closed circuit comprising a compressor 13, an expansion valve 15, and an evaporator 17 on the cold side 7F and a condenser 19 on the hot side 7C. Number 14 schematically indicates a motor, for example an electric motor, for actuating the compressor 13. A refrigerant fluid flows in the circuit, which fluid, being subject to cyclical thermodynamic transformations, removes heat from the cold side 7F of the heat pump and delivers heat to the hot side 7C of the heat pump. The heat is pumped by exploiting the mechanical power generated by the electric motor 14 or by other suitable driver, for example a turbo machine, such as a turbine or an expander.

Still referring to the simplified diagram of figure 1, number 21 indicates a pump for circulating a heat-transferring fluid, for example water, inside the cooling circuit 9. Number 23 indicates a pump for circulating a heat-transferring fluid, for example water, inside the heating circuit 11.

Both the cooling circuit 9 and the heating circuit 11 are connected, as described below, to an auxiliary circuit indicated as a whole with number 25. The auxiliary circuit 25 is fluidly connected to the cooling circuit 9 by means of a removal connection 27, through which the heat-transferring fluid circulating in the cooling circuit 9 is removed from the cooling circuit 9 and flows into the auxiliary circuit 25. The auxiliary circuit 25 is also fluidly connected to the cooling circuit 9 through a delivery connection 29, through which the heat-transferring fluid contained in the auxiliary circuit 25 can be delivered again into the cooling circuit 9.

In substantially mirror-like manner, the auxiliary circuit 25 is fluidly connected to the heating circuit 11 by means of a removal connection 31, through which the heat-transferring fluid circulating in the heating circuit 11 is removed from the heating circuit 11 and flows into the auxiliary circuit 25. Moreover, the auxiliary circuit 25 is fluidly connected to the heating circuit 11 also through a delivery connection 33, through which the heat-transferring fluid contained in the auxiliary circuit 25 can be delivered again into the cooling circuit 11.

A first flow control valve 35 is provided on the delivery connection 29 for regulating the flow of heat-transferring fluid from the auxiliary circuit 25 to the cooling circuit 9. A second flow control valve 37 is provided on the delivery connection 33 for regulating the flow of heat-transferring fluid from the auxiliary circuit 25 to the heating circuit 11.

The auxiliary circuit 25 also comprises a heat removal system 41 for removing heat from the heat-transferring fluid circulating inside the auxiliary circuit 25. The circulation of the heat-transferring fluid in the auxiliary circuit can be facilitated by means of a circulation pump 39.

The heat removal system 41 can comprise a heat exchanger, for example a water/air heat exchanger, if the heat-transferring fluid is water, or a cooling tower. In the first case, that is currently the preferred one, the auxiliary circuit 25 forms a closed system together with the cooling circuit 9 and the heating circuit 11. In both cases, in the heat removal system 41 heat is removed from the heat-transferring fluid circulating in the auxiliary circuit 25 at ambient temperature, i.e. at a temperature intermediate between the minimum temperature of the cooling circuit 9 and the maximum temperature of the heating circuit 11.

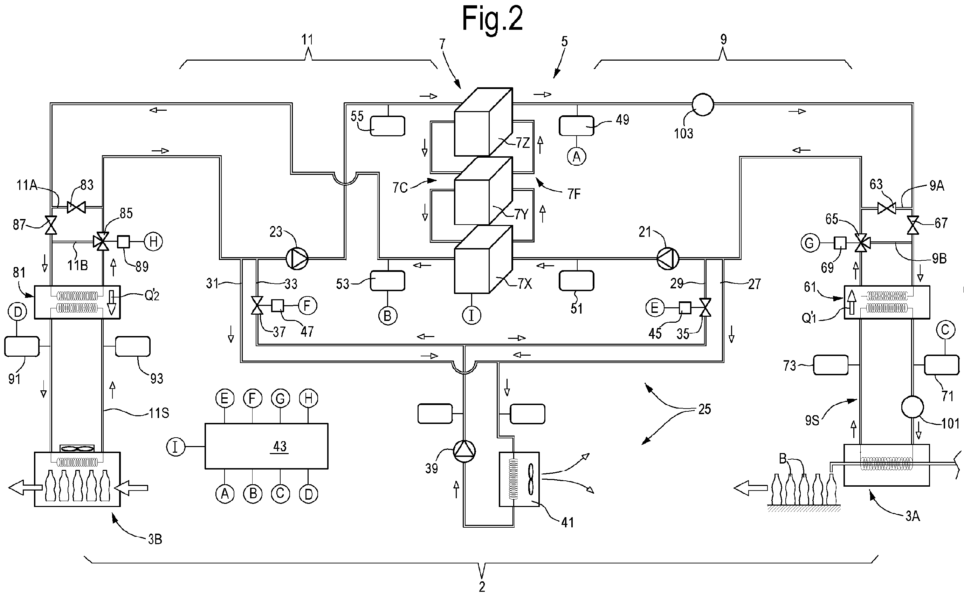

The thermodynamic system 5 also comprises a control arrangement 43, which can comprise first control members 43A adapted to modulate the opening of the first control valve 35 according to a control parameter, as described below in greater detail with reference to figure 2. The control arrangement 43 can comprise further second control members 43B adapted to modulate the opening of the second control valve 37 according to a further control parameter, as described below in greater detail.

The control arrangement 43 can comprise third control members 43C for controlling the heat pump 7, and in particular adapted to increase or decrease the thermal capacity thereof, based on a control algorithm, which can take into account the degree of opening and closing of the first control valve 35 and of the second control valve 37, according to a logic described in greater detail below with reference to figure 2.

In general terms, the thermodynamic system 5 described herein operates as follows. By actuating the heat pump 7, the cold side 7F thereof removes heat Q1 from the cooling circuit 9. In this way it is possible to cool the operative unit 3A by removing therefrom a corresponding amount of heat Q1'. For example, if the plant where the thermodynamic system 5 is used is a bottling plant, the operative unit 3A may be the station where the beverage is bottled in the bottles and may provide a heat exchange system, with which the refrigeration circuit 9 extracts heat Q1' from the beverage before the beverage is bottled in the bottles.

By means of the heat pump 7, the heat removed from the cold side 7F is delivered to the hot side 7C to heat the heat-transferring fluid circulating in the heating circuit 11.

On the hot side 7C of the heat pump 7, heat Q2 is delivered from the refrigerant fluid circulating in the heat pump 7 to the heat-transferring fluid circulating in the heating circuit 11, and heat Q2' is delivered therefrom to the second operative unit 3B. In the aforementioned example of a bottling plant, the operative unit 3B may be a tunnel for heating the filled and capped bottles.

In this case, the operative unit 3A cooled by means of the heat pump 7 is arranged upstream of the operative unit 3B with respect to the feeding direction of the products in the plant or with respect to the steps of the process carried out in the plant. Moreover, the cooling temperature in the operative unit 3A is lower than the heating temperature in the operative unit 3B.

In other applications, the operative unit 3A may be, for example, an extruder or a mold of a plastic material extrusion plant, which must be cooled to remove heat from the injected or extruded molten plastic. In this case, the operative unit 3B will be, for example, a hopper, in which the chips or granules of polymer are to be dried before being fed to the extruder or to the mold. In this case, contrarily to the previous example, the operative unit 3A is arranged downstream of the operative unit 3B with respect to the feeding direction of the material in the plant, or with respect to the process steps. Furthermore, the temperature in the operative unit 3A may be higher than the temperature in the operative unit 3B.

The double arrows F in the diagram of figure 1 conceptually represent the fact that the flow in the plant and in the process, to which the thermodynamic system 5 is associated, can occur either in one direction or in the opposite direction.

When thermal imbalance conditions occur in the operation of the thermodynamic system 5, by means of the control arrangement 43 it is possible to remove a given flow of heat-transferring fluid from the cooling circuit 9 and/or from the heating circuit 11 to deliver it again in one or in the other of these two circuits 9, 11, at a temperature different from that at which the flow has been taken.

For example, if for some reasons the temperature of the heat-transferring fluid at the delivery on the cold side 7F of the heat pump 7 is lower than a set value (called set-point), for example because the thermal load in the operative unit 3A is lowered (i.e. the heat Q1, Q1' is reduced), it is possible to increase the flow through the first flow control valve 35 and to deliver a greater amount of heat-transferring fluid from the auxiliary circuit 25 to the cooling circuit 9. Since the temperature of the heat-transferring fluid at the exit of the heat exchanger 41 is higher than the delivery temperature of the heat-transferring fluid in the cooling circuit 9, i.e. at the exit from the cold side 7F of the heat pump 7, the increase in flow of heat-transferring fluid delivered again in the cooling circuit 9 causes an increase in the thermal load on the cold side 7F of the heat pump 7.

Vice versa, if the delivery temperature from the cold side 7F of the heat pump 7 is higher than a set-point value, it is possible to reduce the flow of heat-transferring fluid re-introduced into the cooling circuit 9 through the first control valve 35. By reducing the flow of heat-transferring fluid at higher temperature than the minimum temperature in the cooling circuit 9, there is a reduction in the thermal load on the cold side 7F of the heat pump 7.

A similar adjustment can be done on the hot side 7C of the heat pump 7, and then on the heating circuit 11. If, for example, the delivery temperature of the heat-transferring fluid on the hot side 7C of the heat pump 7 is higher than a controlled temperature (i.e. at a given temperature set-point), this means that the heat Q2 supplied by the heat pump to the heating circuit 11 and the heat Q2' supplied to the operative unit 3B is lower than expected and therefore the thermal load on the hot side of the heat pump 7 is too low. In order to balance this situation, the control arrangement 43 acts on the second flow control valve 37 to increase the flow of heat-transferring fluid that from the auxiliary circuit 25 is reintroduced into the heating circuit 11. This flow has a lower temperature than the delivery temperature on the hot side of the heat pump and therefore substantially represents an increase in the thermal load on the hot side of the pump. An opposite regulation is provided if the controlled temperature is lower than the set-point temperature. In this case the fictive thermal load represented by the flow fed through the control valve 37 is reduced.

The two control loops modulating the opening and closing of the control valves 35, 37 are independent from each other.

In addition to regulating the flow through the control valves 35 and 37, the control arrangement 43 can act on the capacity of the heat pump 7, with a criterion which will be described below with reference to figure 2. In general terms, the control arrangement 43 can modulate the capacity of the heat pump 7 according to the conditions of greater or lesser opening of the control valves 35 and 37, so as to ensure the correct thermal balancing between the thermal load on the cooling circuit 9 and the thermal load on the heating circuit 11, reducing, at the same time, the energy consumption of the heat pump 7, i.e. the electrical power absorbed by the electric motor actuating the compressor (the motors actuating the compressors) of the heat pump 7.

Figure 2 shows a more detailed diagram of an embodiment of a thermodynamic system associated with a beverage bottling plant. The same reference numbers indicate parts that are functionally equivalent to those already described with reference to figure 1.

Number 3A indicates an operative unit to be cooled, for example a station for bottling a beverage into bottles B. Number 3B indicates an operative unit to be heated, for example a tunnel for heating the filled bottles B.

Number 5 indicates, as a whole, the thermodynamic system allowing removing heat from the operative unit 3A and delivering heat to the operative unit 3B. The thermodynamic system 5 comprises: a heat pump 7, a cooling circuit 9 and a heating circuit 11. The average temperature in the cooling circuit 9 is lower than the average temperature in the heating circuit 11. The electric power supplied to the heat pump 7 allows exchanging heat from the cooling circuit 9 to the heating circuit 11.

The cooling circuit 9 is in heat exchange relationship with the first operative unit 3A and with the cold side 7F of the heat pump 7. The heating circuit 11 is in heat exchange relationship with the second operative unit 3B and with the hot side 7C of the heat pump 7.

In the diagram of figure 2, the heat exchange between the cooling circuit 9 and the operative unit 3A is an indirect heat exchange, through a secondary cooling circuit 9S described below, which, in general, may be part of the cooling circuit 9. Similarly, also the heat exchange between the heating circuit 11 and the operative unit 3B is indirect, through a secondary heating circuit 11S described below, which, in general, may be part of the heating circuit 11.

In the diagram of figure 2, the heat pump 7 is a multi-stage pump, in which three stages 7X, 7Y and 7Z are arranged in series, i.e. in cascade, so as to have a higher temperature difference between the cold side and the hot side of the heat pump 7. Each stage can comprise a compressor and a corresponding actuating electric motor.

Similarly to the diagram of figure 1, also in figure 2 the reference number 21 indicates a circulation pump for circulating a heat-transferring fluid, for example water, in the cooling circuit 9. Number 23 indicates a pump for circulating a heat-transferring fluid, for example water, in the heating circuit 11. The two pumps 21 and 23 can be operated by electric motors with inverters, in order to reduce consumption and to modulate the flow of the heat-transferring fluid in the refrigerating circuit 9 and heating circuit 11 respectively.

The cooling circuit 9 is fluidly connected to an auxiliary circuit 25 by means of a removal connection 27, through which the heat-transferring fluid circulating in the cooling circuit 9 can be removed from the cooling circuit 9 and flow into the auxiliary circuit 25. The auxiliary circuit 25 is also fluidly connected to the cooling circuit 9 through a delivery connection 29, through which the heat-transferring fluid contained in the auxiliary circuit 25 can be delivered again to the cooling circuit 9. On the delivery connection 29 a first control valve 35 is provided for controlling the flow of the heat-transferring fluid from the auxiliary circuit 25 to the cooling circuit 9.

Similarly, the auxiliary circuit 25 is fluidly connected to the heating circuit 11 by means of a removal connection 31, through which the heat-transferring fluid circulating in the heating circuit 11 can be removed from the heating circuit 11 and flow into the auxiliary circuit 25. Moreover, the auxiliary circuit 25 is fluidly connected to the heating circuit 11 also through a delivery connection 33, through which the heat-transferring fluid contained in the auxiliary circuit 25 can be delivered again to the cooling circuit 11. A second flow control valve 37 is provided on the delivery connection 33 for regulating the flow of heat-transferring fluid from the auxiliary circuit 25 to the heating circuit 11.

The auxiliary circuit 25 comprises a heat removal system 41 for removing heat from the heat-transferring fluid circulating in the auxiliary circuit 25. The circulation of the heat-transferring fluid in the auxiliary circuit can be facilitated by means of a circulation pump 39.

Reference number 43 indicates the control arrangement, which may comprise first control members adapted to modulate the opening of the first control valve 35 according to a control parameter, and second control members adapted to modulate the opening of the second control valve 37 according to a further control parameter, as described in more detail below. The control arrangement 43 can comprise third control members for controlling the heat pump 7, and in particular adapted to increase or decrease the thermal capacity thereof, based on a control algorithm that can take into account the degree of opening and closing of the first control valve 35 and of the second control valve 37.

Reference number 45 indicates an actuator controlling the opening and closing of the control valve 35. Reference number 47 indicates an actuator controlling the opening and closing of the control valve 37.

In the diagram of figure 2, a temperature sensor 49 is associated with the cooling circuit 9 for detecting the temperature of the heat-transferring fluid circulating in the cooling circuit 9 at the exit, i.e. at the delivery of the cold side 7F, of the heat pump 7. The reference number 51 indicates a temperature sensor detecting the temperature of the heat-transferring fluid at the entrance of the cold side 7F, i.e. on the return side, of the heat pump 7.

Similarly, a temperature sensor 53 is associated to the heating circuit 11 for detecting the temperature of the heat-transferring fluid circulating in the heating circuit 11 at the exit, i.e., at the delivery side, of the hot side 7C of the heat pump. The reference number 55 indicates a temperature sensor on the return side, i.e. at the entrance, of the hot side 7C of the heat pump 7.

As mentioned above, the cooling circuit 9 is in indirect heat exchange relationship with the operative unit 3A. In fact, a secondary cooling circuit 9S is arranged between the circuit where the heat-transferring fluid circulates, which transfers heat to the cold side 7F of the heat pump 7, and the operative unit 3A. A heat exchanger 61 is arranged between the cooling circuit 9 and the secondary cooling circuit 9S; in said heat-exchanger the heat-transferring fluid circulating in the cooling circuit 9 absorbs heat from a fluid circulating in the secondary cooling circuit 9S.

In some embodiments, the secondary cooling circuit 9S can be an open circuit and the fluid circulating therein may be directly the beverage to be cooled before bottling.

Vice versa, just by way of example, in the embodiment of figure 2, the secondary cooling circuit 9S is a closed circuit, where a secondary heat-transferring fluid circulates, for example water again. This is in heat exchange relationship with the beverage to be cooled in the operative unit 3A.

In the embodiment of figure 2, two branches 9A and 9B are arranged in the cooling circuit 9 in parallel with the heat exchanger 61. In the branch 9A a by-pass valve 63 is arranged.

In the delivery branch of the cooling circuit 9, between the connection points of the parallel branches 9A and 9B, a valve 67 is arranged, hereinafter also referred to as cooling valve 67. By acting on the valves 67 and 63, the flow of the heat-transferring fluid from the cold side 7F of the heat pump can be conveyed to the heat exchanger 61, or can be fully diverted towards the bypass branch 9A.

In the illustrated example, at the connection point between the branch 9B and the return branch from the heat exchanger 61 towards the heat pump 7, a three-way valve 65 is provided, which connects the branch 9B to the return branch. The three-way valve 65 can be an adjustable flow valve controlled by a regulation actuator 69.

The arrangement of the bypass branch 9A, the bypass valve 63 and the cooling valve 67 allows interrupting the flow of the heat-transferring fluid through the heat exchanger 61 whilst the heat-transferring fluid still continues to circulate in the cooling circuit 9. This can be important, for example, in case the operative unit 3A does not require cooling (i.e. the thermal load in the operative unit 3A is equal to zero). For example, if the operative unit 3A is a bottling station, the cooling request may be canceled if the beverage supply is interrupted or temporarily suspended. In this case, by closing the cooling valve 67 and opening the bypass valve 63 it is possible to avoid freezing or excessive cooling of the beverage and at the same time the heat pump 7 can be kept operating, while the heat-transferring fluid continues to circulate in the cooling circuit 9, a condition necessary to avoid the stop of the heat pump 7.

The adjustable three-way valve 65 allows, by means of the regulation actuator 69, to modulate the flow of heat-transferring fluid through the branch 9B and through the heat exchanger 61. As will be explained in greater detail below, with reference to operating modes of the thermodynamic system 5 and of the plant associated thereto, in this way a fine tuning of the temperature of the secondary heat-transferring fluid circulating in the secondary cooling circuit 9S is possible.

One or more temperature sensors can be associated with the secondary cooling circuit 9S. For example, in the diagram of figure 2, a first temperature sensor 71 is provided on the delivery of the secondary cooling circuit 9S, i.e. at the exit from the heat exchanger 61, and a second temperature sensor 73 is provided on the return branch of the secondary cooling circuit 9S.

As mentioned above, the heating circuit 11 is in indirect heat exchange relationship with the operative unit 3B. In particular, in the illustrated embodiment, a secondary heating circuit 11S is arranged between the circuit where the heat-transferring fluid removing heat from the hot side 7C of the heat pump 7 circulates, and the operative unit 3B. Between the heating circuit 11 and the secondary heating circuit 11S a heat exchanger 81 is arranged, where the heat-transferring fluid circulating in the heating circuit 11 transfers heat to a fluid circulating in the secondary heating circuit 11S. In some embodiments, the secondary heating circuit 11S can form a heat sink towards a heating tunnel for heating the bottles B, as schematically shown in figure 2.

In the embodiment of figure 2, two branches 11A and 11B are arranged in parallel to the heat exchanger 81 in the heating circuit 11. A by-pass valve 83 is arranged in the branch 11A. At the point of connection between the branch 11B and the return branch from the heat exchanger 81 towards the heat pump 7 a three-way valve 85 is arranged, connecting the branch 11B to the return branch. In the forward branch of the heating circuit 11, a valve 87 is arranged between the connection points of the parallel branches 11A and 11B, below also referred to as heating valve 87.

The three-way valve 85 can be an adjustable flow valve adjusted by a regulation actuator 89. By acting on the valves 87 and 83, the flow of the heat-transferring fluid from the hot side 7C of the heat pump can be conveyed to the heat exchanger 81, or can be fully directed towards the bypass branch 11A.

The arrangement of the bypass branch 11A, the bypass valve 83 and the heating valve 87 allows stopping the flow of heat-transferring fluid through the heat exchanger 81, whilst the heat-transferring fluid continues to circulate in the heating circuit 11. This can be important, for example, if there is no heating request by the 3B operative unit, i.e. if the thermal load on the hot side of the heat pump 7 fails. For example, if the operative unit 3B is a heating station for heating bottles filled with cold beverage, the heating request may be canceled if the conveyor feeding the bottles through the heating tunnel stops. In this case, by closing the heating valve 87 and opening the bypass valve 83 it is possible to avoid excessive heating of the heating tunnel whilst keeping the heat pump 7 operating, thanks to the fact that the heat-transferring fluid continues to circulate in the heating circuit 11. Furthermore, the efficiency of the heat pump 7 is increased.

The bypass valve 63 and the bypass valve 83 can be controlled by means of flow meters on the secondary cooling circuit 9S and on the secondary heating circuit 115, or by means of signals coming from the process line, along which the operating units 3A and 3B are arranged.

By means of the regulation actuator 89 the adjustable three-way valve 85 allows modulating the flow of heat-transferring fluid through the branch 11B and through the heat exchanger 81. As will be explained in greater detail below, with reference to some operating modes, in this way it is possible to fine-tune the temperature of the secondary heat-transferring fluid circulating in the secondary heating circuit 11S.

One or more temperature sensors can be associated with the secondary heating circuit 11S. For example, in the diagram of figure 2 a first temperature sensor 91 is provided on the delivery of the secondary heating circuit 11S, i.e. at the exit from the heat exchanger 81, and a second temperature sensor 93 is provided on the return branch of the secondary heating circuit 11S.

Various actuators and sensors of the thermodynamic system 5 are connected to the control members 43. In particular, as indicated by the letters A, B, C, D, E, F, G, H, I, the following components are connected to the control members 43: the temperature sensor 49, the temperature sensor 53, the temperature sensor 71, the temperature sensor 91, the actuator 45, the actuator 47, the actuator 69, the actuator 89, the heat pump 7.

It shall be understood that one or more of the elements described above and illustrated in figure 2 can be omitted. For instance, the temperature sensors on the secondary heating circuit 11S and on the secondary cooling circuit 9S may be omitted. The three-way valves 65 and 85 and the respective actuators may also be omitted. Depending on which components are provided or omitted, the thermodynamic system 5 can be adjusted in different ways. Some control modes will be described below.

As previously mentioned, by means of separate regulation loops the thermodynamic system 5 allows acting on the flow control valves 35, 37, and thus to balance the thermal loads on the cold side 7F and on the hot side 7C of the heat pump 7.

According to an embodiment, the adjustment loops of the cooling side and of the heating side of the thermodynamic system 5 use, as a control parameter, the temperature of the heat-transferring fluid on the delivery from the heat pump 7, respectively on the cold side 7F as regards the cooling circuit 9 and on the hot side 7C as regards the heating circuit 11. In this case, the controlled temperatures are the temperatures measured by the temperature sensor 49 for the cooling circuit 9 and by the temperature sensor 53 for the heating circuit 11. The adjustment loops regulate the thermodynamic system 5, independently on the hot side and on the cold side of the heat pump 5, to keep the controlled temperatures approximately at desired values, or set-point values. These values may be fixed, or may vary, for example as described below.

Initially, the thermal capacity of the heat pump 7 can be roughly set, based on the flow in the secondary cooling circuit 9S, e.g. measured by means of a flow meter 101, and on the basis of the difference between the temperatures measured by the temperature sensors 71 and 73, if any. Alternatively, the thermal capacity can be initially set based on the flow of heat-transferring fluid in the cooling circuit 9, measured by means of a flow meter 103, and based on the difference between the temperatures measured by the temperature sensors 49 and 51.

The adjustment loops can operate as follows. T9ₛₑₜ and T11ₛₑₜ respectively indicate the desired values, i.e. the set-point values for the controlled temperatures of the cooling circuit 9 and of the heating circuit 11, and T9_{act} and T11_{act} indicate the actual temperatures measured by the sensors 49 and 53 respectively.

A first regulation loop uses an adjustment algorithm, for example a PID (Proportional Integral Derivative) algorithm that, based on an error between T9ₛₑₜ e T9_{act}, generates a control signal for the control valve 35 regulating the flow from the auxiliary circuit 25 towards the cooling circuit 9. The adjustment can be done as follows. If T9ₛₑₜ<T9_{act}, the heat pump 7 removes too little heat from the cooling circuit 9. To reduce the error between the real temperature value T9_{act} and the set point value T9ₛₑₜ, the valve 35 is gradually closed, so as to reduce the flow of heat-transferring fluid coming from the auxiliary circuit 25, i.e. to reduce the fictive thermal load applied to the cold side 7F of the heat pump from the auxiliary circuit 25.

As the temperature of the heat-transferring fluid from the auxiliary circuit 25 is approximately equal to the ambient temperature, and therefore higher than the temperatures in the cooling circuit 9, the reduction of flow through the control valve 35 causes a reduction in the temperature T9_{act} and therefore a reduction the error between T9_{act} and T9ₛₑₜ.

Vice versa, if the temperature T9_{act} measured by the sensor 49 is lower than the temperature T9ₛₑₜ, the control valve 35 controlling the flow from the auxiliary circuit 25 is opened in order to increase the flow of heat-transferring fluid at ambient temperature supplied to the cooling circuit 9, i.e. in order to increase the fictive load on the cold side of the heat pump 7.

A second temperature control loop in the heating circuit 11 can operate in a similar manner, for example by adjusting the temperature T11_{act} detected by the temperature sensor 53 in order to maintain this temperature at or around a set-point value T11ₛₑₜ.

The second control loop can use an adjustment algorithm, for example a PID (Proportional Integral Derivative) algorithm that, on the basis of an error between T11ₛₑₜ and T11_{act}, generates a signal of regulating the control valve 37 controlling the flow from the auxiliary circuit 25 towards the heating circuit 11. The adjustment can be done as follows. If T11_{act}<T11ₛₑₜ, the heat pump 7 supplies too little heat to the heating circuit 11. In order to reduce the error between the real temperature value T11_{act} and the set-point value T11ₛₑₜ, the control valve 37 is gradually closed, so as to reduce the flow of heat-transferring fluid coming from the auxiliary circuit 25, i.e. the fictive thermal load applied to the hot side 7C of the heat pump from the auxiliary circuit 25.

As the temperature of the heat-transferring fluid coming from the auxiliary circuit 25 is approximately equal to the ambient temperature, and therefore lower than the temperatures in the heating circuit 11, the reduction of the flow through the control valve 37 causes an increase in the temperature T11_{act} and therefore a reduction in the error between T11_{act} and T11ₛₑₜ.

Vice versa, if the temperature T11_{act}>T11ₛₑₜ, the control valve 37 controlling the flow from the auxiliary circuit 25 is opened to increase the flow of heat-transferring fluid at ambient temperature supplied to the heating circuit 11.

With the above described procedure a balancing of the thermal loads on the hot side 7C and on the cold side 7F of the heat pump 7 is obtained by means of the fictive thermal loads constituted by the heat-transferring fluid supplied respectively by the control valve 35 to the cooling circuit 9 and by the control valve 37 to the heating circuit 11.

In some operating conditions, the thermal load on the cold side and/or on the hot side of the heat pump 7 may be absent. For example, the thermal load on the cold side 7F of the heat pump 7 may be absent if the beverage in the bottling station in the operative unit 3A is no longer dispensed. Similarly, the thermal load on the hot side 7C of the heat pump 7 may be absent if the flow of bottles to be heated in the heating tunnel in the operative unit 3B is interrupted.

In case of the first event, the control valve 35 supplies heat-transferring fluid at ambient temperature to the cooling circuit 9, creating or keeping a fictive thermal load on the cold side 7F of the heat pump 7. In the case of the second event, the control valve 37 supplies heat-transferring fluid at ambient temperature to the heating circuit 11, creating or keeping a fictive thermal load on the hot side 7C of the heat pump 7.

In some embodiments, when there is no real thermal load on the hot side 7C or on the cold side 7F of the heat pump, 7 the set-point values T11ₛₑₜ and T9ₛₑₜ can be modified with respect to the values used when there are real thermal loads. In this way the response of the system is faster when the respective real thermal load is applied again.

With the described method, the thermodynamic system 5 remains balanced even if either one or both of the real thermal loads in the operative unit 3A and in the operative unit 3B are missing, for example due to a transient.

In the embodiment described above, the method for controlling the thermodynamic system 5 uses two independent regulation loops for the cooling circuits 9, 9S and the heating circuits 11, 11S, which use, as a controlled parameter, respectively: the temperature of the heat-transferring fluid at the delivery of the cold side 7F of the heat pump 7 (temperature measured by the temperature sensor 49); and the temperature of the heat-transferring fluid at the delivery of the hot side 7C of the heat pump 7 (temperature measured by the temperature sensor 53).

In other embodiments, when the secondary cooling circuit 9S and the secondary heating circuit 11S with the respective temperature sensors 71 and 91 are provided, the control loops of the valves 35 and 37 can use as controlled parameters respectively: the temperature measured by the temperature sensor 71 on the secondary cooling circuit 9S; and the temperature measured by the temperature sensor 91 on the secondary heating circuit 115. The control logic can be the same as described above. In this case, the real temperature values T9_{act} and T11_{act} will be the temperatures measured by the sensors 71 and 91, while the set-point temperatures T9ₛₑₜ and T11ₛₑₜ will be the values to which the control loops will tend to bring the temperatures measured in the secondary cooling circuit and in the secondary heating circuit 11S. In this case, the temperature detected by the temperature sensor 49 will be slightly higher than the temperature T9_{act}, while the temperature detected by the temperature sensor 53 will be slightly lower than the temperature T11_{act}.

In the two embodiments of the control method described above the two three-way valves 65 and 85 do not perform any function and could be omitted. Vice versa, if the four temperature sensors 49, 53, 71, 91 and the two three-way valves 65, 85 are provided, a control logic can be implemented that follows a set-point temperature in the secondary cooling circuit 9S and in the secondary heating circuit 11S, and a set-point temperature in the cooling circuit 9 and in the heating circuit 11.

In this case, with reference to the cold side of the thermodynamic system 5, set-point temperatures T9ₛₑₜ and T9Sₛₑₜ are set for the temperatures related to the temperature sensors 49 and 71. A first control loop with an algorithm, for example a PID algorithm, corrects an error between the set-point T9Sₛₑₜ and the temperature T9S_{act} measured by the temperature sensor 71. This first control loop acts on the three-way valve 65, modulating the flow of heat-transferring fluid through the heat exchanger 61 and through the branch 9B. For example, if the temperature T9S_{act} is lower than T9Sₛₑₜ, the three-way valve 65 will be controlled so as to reduce the flow of heat-transferring fluid through the heat exchanger 61 and thereby increasing the flow through the branch 9B. The contrary occurs if T9S_{act}>T9Sₛₑₜ.

The same happens on the side of the heating circuits 11 and 11S. A control loop, using for example a PID algorithm, controls the three-way valve 85 according to a possible error between the temperature T11S_{act} measured by the temperature sensor 91 and the set-point temperature T11Sₛₑₜ.

At the same time, the control loops of the control valves 35 and 37 modulate the opening or closing of the valves 35, 37, and therefore the flows of heat-transferring fluid from the auxiliary circuit 25 towards the cooling circuit 9 and towards the heating circuit 11, respectively, so as to keep the temperatures T9_{act} and T11_{act} measured by temperature sensors 49 and 53 around the set-point value (T9ₛₑₜ and T11ₛₑₜ, respectively). The set-point values T9ₛₑₜ and T11ₛₑₜ can be fixed as a function of T9Sₛₑₜ and T11Sₛₑₜ, for example by setting a difference of some Celsius degrees (typically 1-5°C, preferably 2-4°C) between T9Sₛₑₜ and T9ₛₑₜ, and between T11Sₛₑₜ and T11ₛₑₜ. The difference can be fixed, or it can be a function of other operating parameters, for example the instantaneous thermal load.

According to particularly advantageous embodiments, the control valves 35 and 37 can have two thresholds of maximum opening and minimum opening, respectively. For example, the maximum opening threshold can correspond to a total opening (100% opening) of the respective valve, while the minimum opening threshold can correspond to a total closing (0% opening) of the respective valve. This is however not strictly necessary. In some embodiments, the thresholds can be, for example, 90% opening (maximum opening threshold) and 10% (minimum opening threshold), respectively. In advantageous embodiments, the minimum opening threshold and the maximum opening threshold can be set between 0% and 30%. In some embodiments, for example, the minimum threshold can be approximately 5% and the maximum threshold can be approximately 15%. The mentioned values are given just by way of non-limiting example.

As will be clearly apparent from the following description, the maximum and minimum opening thresholds are not physical limits imposed on the control valves. If the respective control loops so require, the valves can open beyond the maximum threshold value and/or close beyond the minimum threshold value. The threshold values of maximum opening and minimum opening have the function of correlating the degree of opening of the control valves (and therefore the extent of the respective flows and of the fictive thermal loads represented thereby) with the adjustment of the thermal capacity of the heat pump.

In fact, the threshold values can be used to act in combination on the thermal capacity of the heat pump 7 and on the control valves 35, 37 of the flow of heat-transferring fluid fed in the cooling circuit 9 and heating circuit 11. In other words, according to embodiments described herein, the control arrangement 43 can act not only on the flow control valves 35 and 37, but also on the thermal capacity of the heat pump 7 based on the opening and closing values of the two control valves 35, 37, which regulate the fictive thermal load on the cold side 7F and on the hot side 7C of the heat pump 7.

To this end, according to some embodiments, the control arrangement 43 can execute an algorithm for managing the thermal capacity of the heat pump 7 in the following manner.

If at least one of the two control valves 35, 37 reaches the respective minimum threshold value, i.e. the maximum closing threshold, or falls below it, the capacity of the heat pump 7 is increased. The increase can be stepped. In fact, the achievement of a condition of maximum closing of one or the other of the two control valves 35, 37 means that with the currently set thermal capacity it is not possible to achieve a correct balance between the thermal loads of the cold side 7F and of the 7C hot side of the heat pump 7. In order to avoid instability in the management of the control algorithm, it can be advantageously provided that the thermal capacity of the heat pump 7 is increased only if the condition of minimum opening of one or the other of the two control valves 35, 37 is kept for a time longer than a predetermined time interval t1.

Furthermore, the algorithm for managing the heat pump 7 can provide for reducing the thermal capacity of the heat pump 7 if both control valves 35, 37 have achieved the maximum opening threshold. Also in this case, to avoid instability of the control algorithm, the thermal capacity of the heat pump 7 can be reduced only if the aforementioned condition (achieving or exceeding the maximum opening thresholds) is kept for a given period of time t2, which may be the same as, or different from, t1.

If both the control valves 35, 37 are at the respective maximum opening value or above it, this means that they are supplying the maximum fictive thermal load to the hot side 7C and to the cold side 7F of the heat pump 7. When this condition is achieved, it is advantageous to reduce the thermal capacity of the heat pump 7 and consequently to reduce the fictive loads.

Basically, the maximum opening thresholds of the valves for regulating the heat pump are used only when both valves exceed this value. If one of the two control valves requires an opening greater than the maximum opening threshold value, in order to keep a certain temperature set-point, the valve is free to open up to the value required by the control (even higher than the upper threshold value for the regulation of the heat pump). The condition for which the capacity of the heat pump 7 is decreased only if both the control valves 35 and 37 exceed the upper threshold value, avoids a reduction in the thermal capacity of the heat pump 7 as a result of exceeding the maximum opening threshold by only one of the two control valves. This condition could lead to a reduction in the percentage of opening of the other control valve up to its lower limit, losing the control of the valve.

## Claims

1. A thermodynamic system (5) comprising: a heat pump (7); a cooling circuit (9) adapted to circulate a heat-transferring fluid in heat exchange relationship with a cold side (7F) of the heat pump (7); a heating circuit (11) adapted to circulate a heat-transferring fluid in heat exchange relationship with a hot side (7C) of the heat pump (7); wherein the heat pump (7) is adapted to transfer heat from the cooling circuit (9) to the heating circuit (11); wherein
➢ the cooling circuit (9) is connected to an auxiliary circuit (25) of the thermodynamic system (5), to exchange a flow of heat-transferring fluid with the auxiliary circuit (25); wherein a first flow control valve (35) is provided in the auxiliary circuit (25) for regulating the flow from the auxiliary circuit (25) to the cooling circuit (9);
➢ the heating circuit (11) is connected to said auxiliary circuit (25) to exchange a flow of heat-transferring fluid with the auxiliary circuit (25); wherein a second flow control valve (37) is provided in the auxiliary circuit (25) for regulating the flow from the auxiliary circuit (25) to the heating circuit (11);
wherein the flow of heat-transferring fluid from the auxiliary circuit (25) to the heating circuit (11) and the flow of heat-transferring fluid from the auxiliary circuit (25) to the cooling circuit (9) represent respective fictive thermal loads on the hot side and on the cold side of the heat pump (7), the modulation of said thermal loads allowing thermal balancing of the heating circuit and of the cooling circuit; wherein the cooling circuit (9) is fluidly connected to the auxiliary circuit (25) through a removal connection (27), for removing heat-transferring fluid from the cooling circuit (9) and transfer heat-transferring fluid to the auxiliary circuit (25), and a heat-transfer delivery connection (29), for delivering heat-transferring fluid from the auxiliary circuit (25) to the cooling circuit (9); and wherein the heating circuit (11) is fluidly connected to the auxiliary circuit (25) through a removal connection (31), for removing heat-transferring fluid from the heating circuit (11) and transfer heat-transferring fluid to the auxiliary circuit (25), and a heat-transfer delivery connection (33), for delivering heat-transferring fluid from the auxiliary circuit (25) to the heating circuit (11); and wherein a circulation pump (39) is provided in the auxiliary circuit (25) to facilitate circulation of the heat-transferring fluid in the auxiliary circuit.

2. The thermodynamic system (5) of claim 1, wherein the auxiliary circuit (25) comprises a heat removal system (41) for removing heat from the heat-transferring fluid flowing therein, configured to remove heat at a temperature intermediate between a minimum temperature inside the cooling circuit (9) and a maximum temperature inside the heating circuit (11); and wherein the heat removal system (41) of the auxiliary circuit (25) is preferably configured to exchange heat at ambient temperature; and wherein the heat removal system (41) is preferably a closed circuit, and may comprise, in particular, an air/heat-transferring fluid exchanger.

3. The thermodynamic system of claim 2, wherein the entrance of the heat removal system (41) of the auxiliary circuit (25) is fluidly connected to the removal connection (27), for removing heat-transferring fluid from the cooling circuit (9), and to the removal connection (31), for removing heat-transferring fluid from the heating circuit (11); and wherein the exit of the heat removal system (41) is fluidly connected to the heat-transfer delivery connection (29), for delivering the heat-transferring fluid to the cooling circuit (9), and to the heat-transfer delivery connection (33), for delivering heat-transferring fluid to the heating circuit (11); so that the flow rates of heat-transferring fluid removed from both the cooling circuit (9) and the heating circuit (11) flow through the heat removal system (41).

4. The thermodynamic system (5) of one or more of the previous claims, further comprising: a control system (43) provided with first control members adapted to modulate the opening of the first flow control valve (35) according to a first controlled temperature associated with the cooling circuit (9); and with second control members adapted to modulate the opening of the second flow control valve (37) according to a second controlled temperature associated with the heating circuit (11).

5. The thermodynamic system (5) of claim 4, wherein the first control members comprise a first loop for controlling the first flow control valve (35), configured: to increase the opening of the first flow control valve (35) if the first controlled temperature is lower than a minimum threshold; and to decrease the opening of the first flow control valve (35) if the first controlled temperature is higher than a maximum threshold; and/or wherein the first control members comprise a second loop for controlling the second flow control valve (37), configured: to increase the opening of the second flow control valve (37) if the second controlled temperature is higher than a maximum threshold; and to decrease the opening of the second flow control valve (37) if the second controlled temperature is lower than a minimum threshold.

6. The thermodynamic system (5) of claim 4 or 5, wherein the control system (43) is configured to increase or decrease the capacity of the heat pump (7) according to the opening degree of the first flow control valve (35) and of the second flow control valve (37); and wherein preferably the control system (43) is configured:
to increase the thermal capacity of the heat pump (7) if at least one of said first flow control valve (35) and second flow control valve (37) achieves a respective minimum opening threshold or a value below said threshold;
to decrease the thermal capacity of the heat pump (7) if both the first flow control valve (35) and second flow control valve (37) achieves respective maximum opening thresholds or values above said thresholds.

7. The thermodynamic system (5) of one or more of the previous claims, comprising:
- a first temperature sensor (49; 71) adapted to detect the temperature of the heat-transferring fluid in the cooling circuit (9), preferably to detect the temperature of the heat-transferring fluid at the inlet of the heat pump (7);
- a second temperature sensor (53; 91) adapted to detect the temperature of the heat-transferring fluid in the heating circuit (11), preferably to detect the temperature of the heat-transferring fluid at the outlet of the heat pump (7).

8. The thermodynamic system (5) of claim 7 when depending upon one or more of claims 5 to 6 wherein:
the first controlled temperature is the temperature detected by the first temperature sensor (49; 71); and/or
the second controlled temperature is the temperature detected by the second temperature sensor (53; 91).

9. The thermodynamic system (5) of one or more of the previous claims, wherein the cooling circuit (9) comprises a cooling heat exchanger (61), where the heat-transferring fluid flowing in the cooling circuit (9) absorbs heat from a secondary cooling circuit (9S); and wherein the cooling circuit (9) preferably comprises a bypass system (9A, 63, 67) adapted to reduce or to interrupt the flow of the heat-transferring fluid in the cooling heat exchanger (61) in case there is no thermal load, or there is only reduced thermal load in the secondary cooling circuit (9S), keeping the heat-transferring fluid circulating in the cooling circuit (9); and preferably further comprising a third temperature sensor (71) adapted to detect a temperature in the secondary cooling circuit (9S), and wherein the first controlled temperature associated with the cooling circuit (9) is the temperature detected by the third temperature sensor (71).

10. The thermodynamic system (5) of one or more of the previous claims, wherein the heating circuit (11) comprises a heating heat exchanger (81), where the heat-transferring fluid flowing in the heating circuit (11) transfers heat to a secondary heating circuit (11S); and wherein the heating circuit (11) preferably comprises a bypass system (11A, 83, 87) adapted to reduce or to interrupt the flow of the heat-transferring fluid in the heating heat exchanger in case there is no thermal load, or there is only reduced thermal load in the secondary heating circuit (11S), keeping the heat-transferring fluid circulating in the heating circuit (11); and preferably further comprising a fourth temperature sensor (91) adapted to detect a temperature in the secondary heating circuit (11S), and wherein the second controlled temperature associated with the heating circuit (11) is the temperature detected by the fourth temperature sensor (91).

11. The thermodynamic system (5) of claim 10 comprising a fine tuning system for regulating the temperature in the secondary cooling circuit (9S) including a flow control valve (65) for controlling the flow in the cooling heat exchanger (61) according to a temperature detected in the secondary cooling circuit (9S); and wherein said flow control valve (65) in the cooling heat exchanger (61) is preferably a three-way valve modulating the flow through the cooling heat exchanger (61) and through a bypass branch (9B) of the cooling heat exchanger (61).

12. The thermodynamic system (5) of claim 10 or 11, comprising a fine tuning system for regulating the temperature in the secondary heating circuit (11S) including a flow control valve (85) for controlling the flow in the heating heat exchanger (81) according to a temperature detected in the secondary heating circuit (11S); and wherein said flow control valve (85) in the heating heat exchanger (81) is preferably a three-way valve modulating the flow through the heating heat exchanger (81) and through a bypass branch (11B) of the heating heat exchanger (81).

13. A plant (2) comprising: a first operative unit (3A) from which heat at a first temperature shall be removed; a second operative unit (3B) to which heat at a second temperature shall be delivered; a thermodynamic system (5) according to one or more of the previous claims; wherein the cooling circuit (9) of the thermodynamic system (5) is in heat exchange relationship with the first operative unit (3A); and wherein the heating circuit (11) is in heat exchange relationship with the second operative unit (3B).

14. A method for transferring heat in a plant or process comprising a first operative unit (3A) and a second operative unit (3B); wherein the method comprises the following steps:
circulating a heat-transferring fluid in a cooling circuit (9) exchanging heat with the first operative unit (3A) and with a cold side (7F) of a heat pump (7);
extracting heat at a first temperature from the first operative unit (3A) through the heat pump (7) and the cooling circuit (9);
circulating a heat-transferring fluid in a heating circuit (11) exchanging heat with the second operative unit (3B) and with a hot side (7C) of the heat pump (7);
delivering heat at a second temperature to the second operative unit (3B) through the heat pump (7) and the heating circuit (11);
transferring a first flow of heat-transferring fluid from the cooling circuit (9) to an auxiliary circuit (25);
transferring a second flow of heat-transferring fluid from the heating circuit (11) to the auxiliary circuit (25);
exchanging heat between the first flow of heat-transferring fluid and the second flow of heat-transferring fluid and a heat source at a temperature intermediate between the first temperature and the second temperature;
transferring a third flow of heat-transferring fluid at the intermediate temperature from the auxiliary circuit (25) to the cooling circuit (9), and a fourth flow of heat-transferring fluid at the intermediate temperature from the auxiliary circuit (25) to the heating circuit (11) facilitated by means of a circulation pump (39).

15. The method of claim 14, comprising the step of balancing the thermal load on the cold side and on the hot side of the heat pump (7) by modulating the third flow of heat-transferring fluid and the fourth flow of heat-transferring fluid.

16. The method of claim 14 or 15, further comprising the step of adjusting the thermal capacity of the heat pump (7) according to the third flow of heat-transferring fluid and to the fourth flow of heat-transferring fluid.

17. The method of claim 14 or 15 or 16, comprising the following steps:
modulating the third flow of heat-transferring fluid from the auxiliary circuit (25) to the cooling circuit (9) according to a controlled parameter indicative of the thermal load on the cooling circuit (9);
modulating the fourth flow of heat-transferring fluid from the auxiliary circuit (25) to the heating circuit (11) according to a controlled parameter indicative of the thermal load on the heating circuit (11).

18. The method of claim 17, comprising the steps of:
modulating the third flow of heat-transferring fluid from the auxiliary circuit (25) to the cooling circuit (9) by means of a first control valve (35) with controlled opening;
modulating the fourth flow of heat-transferring fluid from the auxiliary circuit (25) to the heating circuit (11) by means of a second control valve (37) with controlled opening.

19. The method of one or more of claims 14 to 18, comprising the steps of:
decreasing the thermal capacity of the heat pump (7) if both the third flow and fourth flow of heat-transferring fluid are equal to, or greater than respective maximum thresholds and/or if both control valves (35, 37) controlling the third and the fourth flow of heat-transferring fluid have achieved or exceed respective maximum opening thresholds;
increasing the thermal capacity of the heat pump (7) if at least one of the third flow and fourth flow of heat-transferring fluid is equal to, or lower than a respective minimum threshold and/or if at least one of two control valves (35, 37) controlling the third and the fourth flow of heat-transferring fluid has achieved or dropped below said minimum opening thresholds.

## Patentansprüche

1. Thermodynamisches System (5) mit einer Wärmepumpe (7), einem Kühlkreis (9), der ausgebildet ist, um ein Wärme-übertragendes Fluid in einer wärmetauschenden Beziehung mit einer kalten Seite (7F) der Wärmepumpe (7) zu zirkulieren, einem Heizkreis (11), der ausgebildet ist, um ein Wärme-übertragendes Fluid in einer wärmetauschenden Beziehung mit einer heißen Seite (7C) der Wärmepumpe (7) zu zirkulieren, wobei die Wärmepumpe (7) ausgebildet ist, um Wärme von dem Kühlkreis (7) an den Heizkreis (11) zu übertragen, wobei
der Kühlkreis (9) mit einem Hilfskreis (25) des thermodynamischen Systems (7) verbunden ist, um einen Fluss des Wärme-übertragenden Fluids mit dem Hilfskreis (24) auszutauschen, wobei ein erstes Flusssteuerventil (35) in dem Hilfskreis (25) vorgesehen ist, um den Fluss von dem Hilfskreis (25) zu dem Kühlkreis (9) zu regulieren,
der Heizkreis (11) mit dem Hilfskreis (25) verbunden ist, um einen Fluss des Wärme-übertragenden Fluids mit dem Hilfskreis (25) auszutauschen, wobei ein zweites Flusssteuerventil (37) in dem Hilfskreis (25) vorgesehen ist, um den Fluss von dem Hilfskreis (25) zu dem Heizkreis (11) zu regulieren,
wobei der Fluss des Wärme-übertragenden Fluids von dem Hilfskreis (25) zu dem Heizkreis (11) und der Fluss des Wärme-übertragenden Fluids von dem Hilfskreis (25 zu dem Kühlkreis (9) jeweilige fiktive thermische Belastungen an der heißen Seite und an der kalten Seite der Wärmepumpe (7) repräsentieren, wobei die Modulation der thermischen Belastungen einen thermischen Ausgleich des Heizkreises und des Kühlkreises ermöglichen, wobei der Kühlkreis (9) fluidmäßig mit dem Hilfskreis (25) über eine Entfernungsverbindung (27) zum Entfernen des Wärme-übertragenden Fluids aus dem Kühlkreis (9) und zur Übertragung des Wärme-übertragenden Fluids an den Hilfskreis (25) verbunden ist, und mit einer Wärme-übertragenden Zufuhrverbindung (29) zum Zuführen von Wärme-übertragendem Fluid von dem Hilfskreis (25) an den Kühlkreis (9) und wobei der Heizkreis (11) fluidmäßig mit dem Hilfskreis (25) durch die Zufuhrverbindung (31) verbunden ist,, um Wärme-übertragendes Fluid von dem Hilfskreis (25) an den Heizkreis (11) zu liefern, und wobei eine Zirkulationspumpe (39) in dem Hilfskreis (25) vorgesehen ist, um eine Zirkulation des Wärme-übertragenden Fluids in dem Hilfskreis zu ermöglichen.

2. Thermodynamisches System (5) nach Anspruch 1, wobei der Hilfskreis (25) ein Wärme-Entfernungssystem (41) zum Entfernen von Wärme aus dem darin strömenden Wärme-übertragenden Fluid aufweist, das ausgebildet ist, um Wärme bei einer Temperatur zwischen einer Minimaltemperatur innerhalb des Kühlkreises (9) und einer Maximaltemperatur innerhalb des Heizkreises (11) zu entfernen, und wobei das Wärme-Entfernungssystem (41) des Hilfskreises (25) vorzugsweise ausgebildet ist, um Wärme mit einer Umgebungstemperatur auszutauschen, und wobei das Wärme-Entfernungssystem (41) vorzugsweise ein geschlossener Kreis ist und insbesondere ein Luft/Wärme-übertragenden Fluidtauscher aufweisen kann.

3. Thermodynamisches System nach Anspruch 2, wobei der Eingang des Wärme-Entfernungssystems (41) des Hilfskreises (25) fluidmäßig mit der Entfernungsverbindung (2 27) verbunden ist, um Wärme-übertragendes Fluid aus dem Kühlkreis (9) zu entfernen und zu der Entfernungsverbindung (31), um Wärme-übertragendes Fluid aus dem Heizkreis (11) zu entfernen, und wobei der Ausgang des Wärme-Entfernungssystems (41) fluidmäßig mit der Wärmeübertragung-Zufuhrverbindung (29) verbunden ist, um das Wärme-übertragende Fluid an den Kühlkreis (9) zu liefern, und an die Wärme-übertragende Zufuhrverbindung, um Wärme-übertragendes Fluid an den Heizkreis (11) zu liefern, sodass die Flussraten des Wärme-übertragenden Fluids, das sowohl aus dem Kühlkreis (9) als auch dem Heizkreis (11) entfernt wurde, durch das Wärme-Entfernungssystem (41) fließen.

4. Thermodynamisches System (5) nach einem oder mehreren der vorstehenden Ansprüche mit ferner einem Steuersystem (43), das mit ersten Steuerelementen versehen ist, die ausgebildet sind, um das Öffnen des ersten Flusssteuerventils (35) entsprechend einer ersten gesteuerten Temperatur zu modulieren, die mit dem Kühlkreis (9) verbunden ist, und mit zweiten Steuerelementen, die ausgebildet sind, um das Öffnen des zweiten Flusssteuerventils (37) entsprechend einer zweiten gesteuerten Temperatur zu modulieren, die mit dem Heizkreis (11) verbunden ist.

5. Thermodynamisches System (5) nach Anspruch 4, wobei die ersten Steuerelemente eine erste Schleife zur Steuerung des ersten Flusssteuerventils (35) aufweisen, die ausgebildet ist:
um das Öffnen des ersten Flusssteuerventils (35) zu vergrößern, falls die erste gesteuerte Temperatur geringer als eine minimale Schwelle ist, und um das Öffnen des ersten Flusssteuerventils (35) zu vermindern, falls die erste gesteuerte Temperatur höher als eine maximale Schwelle ist,
und/oder wobei die ersten gesteuerten Elemente eine zweite Schleife aufweisen, um das zweite Flusssteuerventil (37) zu steuern, die ausgebildet ist: um das Öffnen des zweiten Flusssteuerventils (37) zu vergrößern, falls die zweite gesteuerte Temperatur höher als eine maximale Schwelle ist, und das Öffnen des zweiten Flusssteuerventils (37) zu vermindern, falls die zweite gesteuerte Temperatur geringer als eine minimale Schwelle ist.

6. Thermodynamisches System (5) nach Anspruch 4 oder 5, wobei das Steuersystem (43) ausgebildet ist, um die Kapazität der Wärmepumpe (7) entsprechend dem Öffnungsgrad des ersten Flusssteuerventils (35) und des zweiten Flusssteuerventils (37) zu vergrößern oder zu verkleinern, und wobei vorzugsweise das Steuersystem (43) ausgebildet ist: um die thermische Kapazität der Wärmepumpe (7) zu erhöhen, falls mindestens eines von dem ersten Flusssteuerventil (35) und dem zweiten Flusssteuerventil (37) eine jeweilige minimale Öffnungsschwelle oder ein Wert unterhalb der Schwelle erreicht, um die thermische Kapazität der Wärmepumpe (7) zu vermindern, falls sowohl das erste Flusssteuerventil (35) als auch das zweite Flusssteuerventil (37) jeweilige maximale Öffnungsschwellen oder Werte oberhalb dieser Schwellen erreichen.

7. Thermodynamisches System (5) nach einem oder mehreren der vorstehenden Ansprüche mit:
- einem ersten Temperatursensor (49; 71), der ausgebildet ist, um die Temperatur des Wärme-übertragenden Fluids in den Kühlkreis (9) zu erfassen, vorzugsweise die Temperatur des Wärme-übertragenden Fluids an dem Einlass der Wärmepumpe (7),
- einem zweiten Temperatursensor (53; 91), der ausgebildet ist, um die Temperatur des Wärme-übertragenden Fluids in dem Heizkreis (11) zu erfassen, vorzugsweise um die Temperatur des Wärme-übertragenden Fluids an dem Auslass der Wärmepumpe (7) zu erfassen.

8. Thermodynamisches System (5) nach Anspruch 7, wenn abhängig von einem oder mehreren der Ansprüche 5 bis 6, wobei:
die erste gesteuerte Temperatur eine Temperatur ist, die durch den ersten Temperatursensor (49; 71) erfasst wurde, und/oder
die zweite gesteuerte Temperatur die Temperatur ist, die durch den zweiten Temperatursensor (53; 91) erfasst wurde.

9. Thermodynamisches System (5) nach einem oder mehreren der vorstehenden Ansprüche, wobei der Kühlkreis (9) einen Kühl-Wärmetauscher (61) aufweist, wobei das Wärme-übertragende Fluid, das in dem Kühlkreis (9) strömt, Wärme von einem sekundären Kühlkreis (9S) absorbiert und wobei der Kühlkreis (9) vorzugsweise ein Umgehungssystem (9A, 63, 67) aufweist, das ausgebildet ist, um den Fluss von Wärme-übertragendem Fluid in dem Kühl-Wärmetauscher (61) zu unterbrechen, falls keine thermische Last vorhanden ist oder nur eine reduzierte thermische Last in dem sekundären Kühlkreis (9S), wodurch das Wärme-übertragende Fluid in dem Kühlkreis (9) zirkuliert gehalten wird, und mit vorzugsweise ferner einem dritten Temperatursensor (71), der ausgebildet ist, um eine Temperatur in dem sekundären Kühlkreis (9S) zu erfassen, und wobei die erste gesteuerte Temperatur, die mit dem Kühlkreis (9) verbunden ist, die Temperatur ist, die durch den dritten Temperatursensor (71) erfasst wurde.

10. Thermodynamisches System (5) nach einem oder mehreren der vorstehenden Ansprüche, wobei der Heizkreis (11) ein Heiz-Wärmetauscher (81) aufweist, wobei Wärme-übertragendes Fluid, das in dem Heizkreis (11) strömt, Wärme an einen sekundären Heizkreis (11S) überträgt und wobei der Heizkreis (11) vorzugsweise ein Umgehungssystem (11A, 83, 87) aufweist, das ausgebildet ist, um den Fluss des Wärme-übertragenden Fluids in dem Heiz-Wärmetauscher in einem Fall zu reduzieren oder zu unterbrechen, bei dem keine thermische Last vorliegt oder wenn nur eine reduzierte thermische Last in dem sekundären Heizkreis (11S) vorliegt, wobei das Wärme-übertragende Fluid in dem Heizkreis (11) zirkulierend gehalten wird, und mit vorzugsweise einem vierten Temperatursensor (91), der ausgebildet ist, um eine Temperatur in dem sekundären Heizkreis (11S) zu erfassen, und wobei die zweite gesteuerte Temperatur, die mit dem Heizkreis verbunden ist, die Temperatur ist, die durch den vierten Temperatursensor (91) erfasst wurde.

11. Thermodynamisches System (5) nach Anspruch 10 mit einem Feinabstimmungssystem zum Regulieren der Temperatur in dem zweiten Kühlkreis (9S) mit einem Flusssteuerventil (65) zum Steuern des Flusses in dem Kühl-Wärmetauscher (61) entsprechend einer Temperatur, die in dem sekundären Kühlkreis (9S) erfasst wurde, und wobei das Flusssteuerventil (65) in dem Kühl-Wärmetauscher (61) vorzugsweise ein Dreiwegeventil ist, das den Fluss durch den Kühl-Wärmetauscher (61) und durch einen Umgehungszweig (9B) des Kühl-Wärmetauschers (61) moduliert.

12. Thermodynamisches System (5) nach Anspruch 10 oder 11 mit einem Feinabstimmungssystem zum Regulieren der Temperatur in dem sekundären Heizkreis (11S) mit einem Flusssteuerventil (85) zum Steuern des Flusses in dem Heiz-Wärmetauscher (81) entsprechend einer Temperatur, die in dem sekundären Heizkreis (11S) erfasst wurde, und wobei das Flusssteuerventil (85) in dem Heiz-Wärmetauscher (81) vorzugsweise ein Dreiwegeventil ist, das den Fluss durch den Heiz-Wärmetauscher (81) und durch einen Umgehungszweig (11B) des Heiz-Wärmetauschers (81) moduliert.

13. Anlage (2) mit einer ersten operativen Einheit (3A), von der Wärme mit einer ersten Temperatur entfernt werden soll, einer zweiten operativen Einheit (3B), an die Wärme bei einer zweiten Temperatur geliefert werden soll, einem thermodynamischen System (5) nach einem oder mehreren der vorstehenden Ansprüche, wobei der Kühlkreis (9) des thermodynamischen Systems (5) in einer Wärme-tauschenden Beziehung mit der ersten operativen Einheit (3A) steht und wobei der Heizkreis (11) in einer Wärme-tauschenden Beziehung mit der zweiten operativen Einheit (3B) steht.

14. Verfahren zum Übertragen von Wärme in einer Anlage oder einem Prozess mit einer ersten operativen Einheit (3A) und einer zweiten operativen Einheit (3B), wobei das Verfahren die folgenden Schritte aufweist:
Zirkulieren eines Wärme-übertragenden Fluids in einem Kühlkreis (9), der Wärme mit der ersten operativen Einheit (3A) und mit einer kalten Seite (7F) einer Wärmepumpe (7) austauscht,
Extrahieren von Wärme mit einer ersten Temperatur von der ersten operativen Einheit (3A) durch die Wärmepumpe (7) und den Kühlkreis (9),
Zirkulieren eines Wärme-übertragenden Fluids in einem Heizkreis (11), der Wärme mit der zweiten operativen Einheit (3B) und mit einer heißen Seite (7C) der Wärmepumpe (7) austauscht,
Zuführen von Wärme mit einer zweiten Temperatur an die zweite operative Einheit (3B) durch die Wärmepumpe (7) und den Heizkreis (11),
Übertragen eines ersten Flusses von Wärme-übertragenden Fluid von dem Kühlkreis (9) an einen Hilfskreis (25),
Übertragen eines zweiten Flusses von Wärme-übertragenden Fluid von dem Heizkreis (11) an den Hilfskreis (25),
Austausch von Wärme zwischen dem ersten Fluss des Wärme-übertragenden Fluids und dem zweiten Fluss des Wärme-übertragenden Fluids und einer Wärmequelle bei einer Temperatur zwischen der ersten Temperatur und der zweiten Temperatur,
Übertragen eines dritten Flusses von Wärme-übertragenden Fluid bei der Zwischentemperatur von dem Hilfskreis (25) an den Kühlkreis (9) und eines vierten Flusses von Wärme-übertragendem Fluid mit der Zwischentemperatur von dem Hilfskreis (25) an den Heizkreis (11, was mittels einer Zirkulationspumpe (39 ermöglicht wird.

15. Verfahren nach Anspruch 14 mit dem Schritt des Ausgleichs der thermischen Last an der kalten Seite und der heißen Seite der Wärmepumpe (7) durch Modellieren des dritten Flusses des Wärme-übertragenden Fluids und des vierten Flusses des Wärme-übertragenden Fluids.

16. Verfahren nach Anspruch 14 oder 15 mit ferner dem Schritt des Einstellens der thermischen Kapazität der Wärmepumpe (7) entsprechend dem dritten Fluss des Wärme-übertragenden Fluids und dem vierten Fluss des Wärme-übertragenden Fluids.

17. Verfahren nach Anspruch 14 oder 15 oder 16 mit den folgenden Schritten:
Modulieren des dritten Flusses des Wärme-übertragenden Fluids von dem Hilfskreis (25) an den Kühlkreis (9) entsprechend einem gesteuerten Parameter, der die thermische Last an dem Kühlkreis (9) anzeigt,
Modulieren des vierten Flusses des Wärme-übertragenden Fluids von dem Hilfskreis (25) an den Heizkreis (11) entsprechend einem gesteuerten Parameter, der die thermische Last an dem Heizkreis (11) anzeigt.

18. Verfahren Anspruch 17 mit den Schritten:
Modulieren des dritten Flusses des Wärme-übertragenden Fluids von dem Hilfskreis (25) an den Kühlkreis (9) mittels eines ersten Steuerventils (35) mit gesteuerter Öffnung,
Modulieren des vierten Flusses des Wärme-übertragenden Fluids von dem Hilfskreis (25) an den Heizkreis (11) mittels eines zweiten Steuerventils (37) mit gesteuerter Öffnung.

19. Verfahren nach einem oder mehreren der Ansprüche 14 bis 18 mit den Schritten:
Vermindern der thermischen Kapazität der Wärmepumpe (7) falls sowohl der dritte Fluss als auch der vierte Fluss des Wärme-übertragenden Fluids gleich oder größer als jeweilige maximale Schwellen sind oder falls beide Steuerventile (35, 37), die den dritten und den vierten Fluss des Wärme-übertragenden Fluids steuern, ihre jeweiligen maximalen Öffnungsschwellen erreicht oder überschritten haben,
Vergrößern der thermischen Kapazität der Wärmepumpe (7) falls mindestens einer von dem dritten Fluss und dem vierten Fluss des Wärme-übertragenden Fluids gleich oder kleiner als eine jeweilige minimale Schwelle ist und/oder falls mindestens eines der beiden Steuerventile (35, 37), die den dritten und den vierten Fluss des Wärme-übertragenden Fluids steuern, die minimale Öffnungsschwelle erreicht oder darunter fällt.

## Revendications

1. Un système thermodynamique (5) comprenant : une pompe à chaleur (7) ; un circuit de refroidissement (9) apte à faire circuler un fluide caloriporteur en relation d'échange de chaleur avec un côté froid (7F) de la pompe à chaleur (7) ; un circuit de chauffage (11) apte à faire circuler un fluide caloriporteur en relation d'échange de chaleur avec un côté chaud (7C) de la pompe à chaleur (7) ; dans lequel la pompe à chaleur (7) est apte à transférer de la chaleur du circuit de refroidissement (9) au circuit de chauffage (11) ; dans lequel
> le circuit de refroidissement (9) est connecté à un circuit auxiliaire (25) du système thermodynamique (5), pour échanger un flux de fluide caloriporteur avec le circuit auxiliaire (25) ; dans lequel une première vanne de commande de flux (35) est prévue dans le circuit auxiliaire (25) pour réguler le flux allant du circuit auxiliaire (25) au circuit de refroidissement (9) ;
> le circuit de chauffage (11) est connecté audit circuit auxiliaire (25) pour échanger un flux de fluide caloriporteur avec le circuit auxiliaire (25) ; dans lequel une deuxième vanne de commande de flux (37) est prévue dans le circuit auxiliaire (25) pour réguler le flux allant du circuit auxiliaire (25) au circuit de chauffage (11) ;
dans lequel le flux de fluide caloriporteur allant du circuit auxiliaire (25) au circuit de chauffage (11) et le flux de fluide caloriporteur allant du circuit auxiliaire (25) au circuit de refroidissement (9) représentent des charges thermiques fictives respectives du côté chaud et du côté froid de la pompe à chaleur (7), la modulation desdites charges thermiques permettant un équilibrage thermique du circuit de chauffage et du circuit de refroidissement ; dans lequel le circuit de refroidissement (9) est connecté de manière fluidique au circuit auxiliaire (25) par l'intermédiaire d'une connexion de retrait (27) ; pour retirer du fluide caloriporteur du circuit de refroidissement (9) et transférer du fluide caloriporteur au circuit auxiliaire (25), et une connexion de fourniture de transfert de chaleur (29), pour fournir du fluide caloriporteur du circuit auxiliaire (25) au circuit de refroidissement (9) ; et dans lequel le circuit de chauffage (11) est connecté de manière fluidique au circuit auxiliaire (25) par l'intermédiaire d'une connexion de retrait (31), pour retirer du fluide caloriporteur du circuit de chauffage (11) et transférer du fluide caloriporteur au circuit auxiliaire (25), et une connexion de fourniture de transfert de chaleur (33), pour fournir du fluide caloriporteur du circuit auxiliaire (25) au circuit de chauffage (11) ; et dans lequel une pompe de circulation (39) est prévue dans le circuit auxiliaire (25) pour faciliter la circulation du fluide caloriporteur dans le circuit auxiliaire.

2. Le système thermodynamique (5) selon la revendication 1, dans lequel le circuit auxiliaire (25) comprend un système de retrait de chaleur (41) pour retirer de la chaleur du fluide caloriporteur lui-même, configuré pour retirer de la chaleur à une température intermédiaire entre une température minimale à l'intérieur du circuit de refroidissement (9) et une température maximale à l'intérieur du circuit de chauffage (11) ; et dans lequel le système de retrait de chaleur (41) du circuit auxiliaire (25) est de préférence configuré pour échanger de la chaleur à température ambiante ; et dans lequel le système de retrait de chaleur (41) est de préférence un circuit fermé, et peut comprendre, en particulier, un échangeur air/fluide caloriporteur.

3. Le système thermodynamique selon la revendication 2, dans lequel l'entrée du système de retrait de chaleur (41) du circuit auxiliaire (25) est connecté de manière fluidique à la connexion de retrait (27), pour retirer du fluide caloriporteur du circuit de refroidissement (29), et à la connexion de retrait (31), pour retirer du fluide caloriporteur du circuit de chauffage (11) ; et dans lequel la sortie du système de retrait de chaleur (41) et connecté de manière fluidique à la connexion de fourniture de transfert de chaleur (29), pour fournir du fluide caloriporteur au circuit de refroidissement (9), et à la connexion de fourniture de transfert de chaleur (33), pour fournir du fluide caloriporteur au circuit de chauffage (11) ; de sorte que les débits de fluide caloriporteur retirés à la fois du circuit de refroidissement (9) et du circuit de chauffage (11) circulent à travers le système de retrait de chaleur (41).

4. Le système thermodynamique (5) selon l'une ou plusieurs des revendications précédentes, comprenant en outre : un système de commande (43) pourvu de premiers organes de commande apte à moduler l'ouverture de la première vanne de commande de flux (35) en fonction d'une première température contrôlée associée au circuit de refroidissement (9) ; et avec des deuxièmes organes de commande aptes à moduler l'ouverture de la deuxième vanne de commande de flux (37) en fonction d'une deuxième température contrôlée associée au circuit de chauffage (11).

5. Le système thermodynamique (5) selon la revendication 4, dans lequel les premiers organes de commande comprennent une première boucle pour commander la première vanne de commande de flux (35), configurée pour : augmenter l'ouverture de la première vanne de commande de flux (35) si la première température contrôlée est inférieure à un plancher ; et pour diminuer l'ouverture de la première vanne de commande de flux (35) si la première température contrôlée est supérieure à un plafond ; et/ou dans lequel les premiers organes de commande comprennent une deuxième boucle pour commander la deuxième vanne de commande de flux (37), configurée pour : augmenter l'ouverture de la deuxième vanne de commande de flux (37) si la deuxième température contrôlée est supérieure à un plafond ; et pour diminuer l'ouverture de la deuxième vanne de commande de flux (37) si la deuxième température contrôlée est inférieure à un plancher.

6. Le système thermodynamique (5) selon la revendication 4 ou 5, dans lequel le système de commande (43) est configuré pour augmenter ou diminuer la capacité de la pompe à chaleur (7) en fonction du degré d'ouverture de la première vanne de commande de flux (35) et de la deuxième vanne de commande de flux (37) ; et dans lequel de préférence le système de commande (43) est configuré pour :
augmenter la capacité thermique de la pompe à chaleur (7) si au moins l'une parmi la première vanne de commande de flux (35) et la deuxième vanne de commande de flux (37) atteint un plancher d'ouverture respectif ou une valeur en dessous de ce plancher;
diminuer la capacité thermique de la pompe à chaleur (7) si à la fois la première vanne de commande de flux (35) et la deuxième vanne de commande de flux (37) atteignent des plafonds d'ouverture respectifs ou des valeurs au-dessus de ces plafonds.

7. Le système thermodynamique (5) selon l'une ou plusieurs des revendications précédentes, comprenant :
- un premier thermomètre (49 ; 71) apte à mesurer la température du fluide caloriporteur dans le circuit de refroidissement (9), de préférence à mesurer la température du fluide caloriporteur à l'entrée de la pompe à chaleur (7) ;
- un deuxième thermomètre (53 ; 91) apte à mesurer la température du fluide caloriporteur dans le circuit de chauffage (11), de préférence à mesurer la température du fluide caloriporteur à la sortie de la pompe à chaleur (7).

8. Le système thermodynamique (5) selon la revendication 7, lorsque celle-ci dépend de l'une ou plusieurs des revendications 5 à 6, dans lequel :
la première température contrôlée est la température mesurée par le premier thermomètre (49 ; 71) ; et/ou
la deuxième température contrôlée est la température mesurée par le deuxième thermomètre (53 ; 91).

9. Le système thermodynamique (5) selon l'une ou plusieurs des revendications précédentes, dans lequel le circuit de refroidissement (9) comprend une échangeur de chaleur refroidissant (61), où le fluide caloriporteur circulant dans le circuit de refroidissement (9) absorbe la chaleur provenant d'un circuit de refroidissement secondaire (9S) ; et dans lequel le circuit de refroidissement (9) comprend de préférence un système de dérivation (9A, 63, 67) apte à réduire ou interrompre le flux de fluide caloriporteur dans l'échangeur de de chaleur refroidissant (61) en cas d'absence de charge thermique, ou s'il n'y a qu'une charge thermique réduite dans le circuit de refroidissement secondaire (9S), en maintenant la circulation du fluide caloriporteur dans le circuit de refroidissement (9) ; et comprenant de préférence en outre un troisième thermomètre (71) apte à mesurer la température dans le circuit de refroidissement secondaire (9S), et dans lequel la première température contrôlée associée au circuit de refroidissement (9) est la température mesurée par le troisième thermomètre (71).

10. Le système thermodynamique (5) selon l'une ou plusieurs des revendications précédentes, dans lequel le circuit de chauffage (11) comprend un échangeur de chaleur chauffant (81), où le fluide caloriporteur circulant dans le circuit de chauffage (11) transfère de la chaleur à un circuit de chauffage secondaire (11S) ; et dans lequel le circuit de chauffage (11) comprend de préférence un système de dérivation (11A, 83, 87) apte à réduire ou interrompre le flux du fluide caloporteur dans l'échangeur de chaleur chauffant en cas d'absence de charge thermique, ou s'il n'y a qu'une charge thermique réduite dans le circuit de chauffage secondaire (115), en maintenant la circulation du fluide caloriporteur dans le circuit de chauffage (11) ; et comprenant en outre de préférence un quatrième thermomètre (91) apte à mesurer la température dans le circuit de chauffage secondaire (115), et dans lequel la deuxième température contrôlée associée au circuit de chauffage (11) est la température mesurée par le quatrième thermomètre (91).

11. Le système thermodynamique (5) selon la revendication 10, comprenant un système de réglage fin pour réguler la température dans le circuit de refroidissement secondaire (9S) incluant une vanne de commande de flux (65) pour commander le flux dans l'échangeur de chaleur refroidissant (61) en fonction de la température mesurée dans le circuit de refroidissement secondaire (9S) ; et dans lequel ladite vanne de commande de flux (65) dans l'échangeur de chaleur refroidissant (61) est de préférence une vanne à trois voies modulant le flux à travers l'échangeur de chaleur refroidissant (61) et à travers une branche de dérivation (9B) de l'échangeur de chaleur refroidissant (61).

12. Le système thermodynamique (5) selon la revendication 10 ou 11, comprenant une système de réglage fin pour régler la température dans le circuit de chauffage secondaire (11S) incluant une vanne de commande de flux (85) pour commander le flux dans l'échangeur de chaleur chauffant (81) en fonction de la température mesurée dans le circuit de chauffage secondaire (11S) ; et dans lequel ladite vanne de commande de flux (85) dans l'échangeur de chaleur chauffant (81) est de préférence une vanne à trois voies modulant le flux à travers l'échangeur de chaleur chauffant (81) et à travers une branche de dérivation (11B) de l'échangeur de chaleur chauffant (81).

13. Une installation (2) comprenant : une première unité fonctionnelle (3A) dont la chaleur à une première température doit être retirée ; une deuxième unité fonctionnelle (3B) à laquelle de la chaleur à une deuxième température doit être fournie ; un système thermodynamique (5) selon l'une ou plusieurs des revendications précédentes ; dans laquelle le circuit de refroidissement (9) du système thermodynamique (5) est en relation d'échange de chaleur avec la première unité fonctionnelle(3A) ; et dans lequel le circuit de chauffage (11) est en relation d'échange thermique avec la deuxième unité fonctionnelle (3B).

14. Un procédé pour transférer de la chaleur dans une installation ou un procédé comprenant une première unité fonctionnelle (3A) et une deuxième unité fonctionnelle (3B) ; dans lequel le procédé comprend les étapes suivantes consistant à :
faire circuler un fluide caloriporteur dans un circuit de refroidissement (9) échangeant de la chaleur avec la première unité fonctionnelle (3A) et avec un côté froid (7F) d'une pompe à chaleur (7) ;
extraire de la chaleur à une première température de la première unité fonctionnelle (3A) par l'intermédiaire de la pompe à chaleur (7) et du circuit de refroidissement (9) ;
faire circuler un fluide caloriporteur dans un circuit de chauffage (11) échangeant de la chaleur avec la deuxième unité fonctionnelle (3B) et avec un côté chaud (7C) de la pompe à chaleur (7) ;
fournir de la chaleur à une deuxième température à la deuxième unité fonctionnelle (3B) par l'intermédiaire de la pompe à chaleur (7) et du circuit de chauffage (11) ;
transférer un premier flux de fluide caloriporteur du circuit de refroidissement (9) à un circuit auxiliaire (25) ;
transférer un deuxième flux de fluide caloriporteur du circuit de chauffage (11) au circuit auxiliaire (25) ;
échanger de la chaleur entre le premier flux de fluide caloriporteur et le deuxième flux de fluide caloriporteur et une source de chaleur à une température intermédiaire entre la première température et la deuxième température ;
transférer un troisième flux de fluide caloriporteur à la température intermédiaire, du circuit auxiliaire (25) au circuit de refroidissement (9), et un quatrième flux de fluide caloriporteur à la température intermédiaire du circuit auxiliaire (25) au circuit de chauffage (11) facilité au moyen d'une pompe de circulation (39).

15. Le procédé selon la revendication 14, comprenant l'étape consistant à équilibrer la charge thermique du côté froid et du côté chaud de la pompe à chaleur (7) en modulant le troisième flux de fluide caloriporteur et le quatrième flux de fluide caloriporteur.

16. Le procédé selon la revendication 14 ou 15, comprenant en outre l'étape consistant à régler la capacité thermique de la pompe à chaleur (7) en fonction du troisième flux de fluide caloriporteur et du quatrième flux de fluide caloriporteur.

17. Le procédé selon la revendication 14 ou 15 ou 16, comprenant les étapes suivantes consistant à :
moduler le troisième flux de fluide caloriporteur allant du circuit auxiliaire (25) au circuit de refroidissement (9) en fonction d'un paramètre contrôlé indicatif de la charge thermique du circuit de refroidissement (9) ;
moduler le quatrième flux de fluide caloriporteur allant du circuit auxiliaire (25) au circuit de chauffage (11) en fonction d'un paramètre contrôlé indicatif de la charge thermique du circuit de chauffage (11).

18. Le procédé selon la revendication 17, comprenant les étapes consistant à :
moduler le troisième flux de fluide caloriporteur allant du circuit auxiliaire (25) au circuit de refroidissement (9) au moyen d'une première vanne de commande (35) à ouverture commandée ;
moduler le quatrième flux de fluide caloriporteur allant du circuit auxiliaire (25) au circuit de chauffage (11) au moyen d'une deuxième vanne de commande (37) à ouverture commandée.

19. Le procédé selon l'une ou plusieurs des revendications 14 à 18, comprenant les étapes consistant à :
diminuer la capacité thermique de la pompe à chaleur (7) si à la fois le troisième flux et le quatrième flux de fluide caloriporteur sont supérieurs ou égaux à des plafonds respectifs et/ou si les deux vannes de commande (35, 37) commandant les troisième et quatrième flux de fluide caloriporteur sont atteint ou dépassé des plafonds d'ouverture respectifs ;
augmenter la capacité thermique de la pompe à chaleur (7) si au moins l'un des troisième et quatrième flux de fluide caloriporteur est inférieur ou égal à un plancher respectif et/ou si au moins l'une des deux vannes de commande (35, 37) commandant les troisième et quatrième flux de fluide caloriporteur a atteint ou est passé sous lesdits planchers d'ouverture.
